# EUROPÄISCHE PATENTSCHRIFT

(11) **EP 0 328 094 B1**
(45) Veröffentlichungstag und Bekanntmachung des Hinweises auf die Patenterteilung: **08.12.1993**
(21) Anmeldenummer: 89102222.0
(22) Anmeldetag: 08.02.1989
(51) Int. Cl.: F16L 9/18, F16L 39/00

(54) **Doppelrohr sowie Verbindung koaxialer Doppelrohrschüsse mittels eines aus einem solchen Doppelrohr bestehenden Verbindungsstückes**
Doublewalled pipe and connection of coaxial doublewalled pipe sections by means of a connection piece consisting of such a doublewalled pipe
Tuyau à double paroi et raccordement de sections coaxiales de tuyaux à double paroi par une pièce de raccordement composée d'un tel tuyau à double paroi

(30) Priorität: 08.02.1988 AT 239/88
(43) Veröffentlichungstag der Anmeldung: 16.08.1989
(73) Patentinhaber: Joh. Vaillant GmbH u. Co., 42810 Remscheid (DE); n.v. Vaillant s.a., 1620 Drogenbos (BE); VAILLANT S.A.R.L, 94537 Rungis Cedex (FR); VAILLANT Ges.m.b.H, 1233 Wien (AT); Vaillant Ltd., Rochester Kent ME2 4EZ (GB); Vaillant B.V., 1105 BJ Amsterdam (NL); Vaillant GmbH, 8953 Dietikon 1 (CH)
(72) Erfinder: Rothenstein, Wolfgang, D-5600 Wuppertal 2 (DE)
(74) Vertreter: Heim, Johann-Ludwig, Dipl.-Ing.

(56) Entgegenhaltungen:
- DE-A- 2 720 451
- DE-U- 8 631 085
- FR-A- 773 584
- GB-A- 1 422 156
- US-A- 3 088 495

## Beschreibung

Die Erfindung betrifft ein aus geraden koaxialen Rohren unterschiedlichen Durchmessers bestehendes Doppelrohr, das aus zwei sich zu einem Doppelrohr ergänzenden Hälften zusammengesetzt ist, wobei jede Hälfte aus zwei Halbrohren und Grundebenen besteht. Ein derartiges zweiteiliges Doppelrohr ist aus der FR-PS 773 584 (Fig. 18) bekanntgeworden.

Aus Schüssen solcher Doppelrohre zusammengesetzte Doppelrohrleitungen, die aus einem Innenrohr und einem dieses Innenrohr koaxial ummantelnden Außenrohr bestehen, finden beispielsweise bei brennerbeheizten Geräten Verwendung, wobei das Innenrohr der Abgasführung und das Außenrohr der im Gegenstrom erfolgenden Verbrennungsluftzufuhr zum Brenner des Gerätes dient.

Aufgabe der Erfindung ist es, eine einfach gestaltbare und weitgehend dichte Verbindung der beiden Hälften eines solchen Doppelrohres durch eine originelle Gestaltung dieser Hälften zu erzielen, und zwar eine Verbindung, die sich mit geringem Müheaufwand Weitestgehend durch Formschluß herstellen läßt.

Diese Aufgabe wird erfindungsgemäß dadurch gelöst, daß jede Hälfte des Doppelrohres aus zwei umfangsmäßig gegeneinander versetzten Halbrohren besteht, deren Grundebenen nahezu senkrecht zueinander verlaufen.

Die beiden Halbrohre einer einzelnen Hälfte eines solchen Doppelrohres können einfach und zuverlässig miteinander über einen an einen Rand des Halbrohres mit dem kleineren Halbmesser ansetzenden, radial nach außen ragenden Flansch verbunden sein, dessen Breite der Differenz zwischen den Halbmessern der beiden Halbrohre entspricht. Ein solcher Flansch dient der Versteifung des Doppelrohres und der zuverlässigen Fixierung des koaxial innerhalb des Außenrohres angeordneten Innenrohres.

Besonders günstig ist es, wenn auch der gegenüberliegende Rand des Halbrohres mit dem kleineren Halbmesser in dessen Grundebene einen Solchen radial ansetzenden Flansch trägt. Bei dem aus zwei solchen Hälften zusammengesetzten Doppelrohr kommen dann diese Flansche jeweils beider Hälften aneinander zu liegen und es kann zwischen ihnen eine Dichtung angeordnet werden.

Um eine dichte Verbindung der beiden Hälften des Doppelrohres miteinander zu erzielen, erweist es sich als zweckdienlich, wenn die von den beiden Flanschen bestimmte Grundebene des Halbrohres mit dem kleineren Halbmesser mit der von den beiden Rändern des Halbrohres mit dem größeren Halbmesser bestimmten Grundebene einen Winkel α von etwa 80° einschließt.

Von den beiden einander in der Grundebene gegenüberliegenden Rändern des Halbrohres mit dem größeren Halbmesser kann der eine Rand eine Feder und der andere Rand eine zu dieser Feder passende Nut aufweisen. Dadurch ergibt sich eine formschlüssige dichte Verbindung der beiden gemeinsam das Doppelrohr verkörpernden Hälften.

Ein erfindungsgemäßes Doppelrohr eignet sich mit besonderen Vorteilen als Verbindungsstück zur Herstellung einer koaxialen Verbindung beliebig gestaltbarer Doppelrohre der eingangs bezeichneten Gattung.

Die Erfindung erstreckt sich deshalb auch auf eine Verbindung koaxialer Doppelrohrschüsse mittels eines aus einem solchen erfindungsgemäßen Doppelrohr bestehenden Verbindungsstückes.

Soll das erfindungsgemäße Doppelrohr als solches Verbindungsstück Verwendung finden, dann besteht jede seiner beiden Hälften aus einem Halbrohr mit einem dem Innendurchmesser der Außenrohre der zu verbindenden Rohrschüsse entsprechenden Außendurchmesser und aus einem Halbrohr mit einem dem Außendurchmesser der Innenrohre dieser Rohrschüsse entsprechenden Innendurchmesser.

Eine besonders dichte und zuverlässige Verbindung des aus einem solchen Doppelrohr gebildeten Verbindungsstückes mit den zu verbindenden Doppelrohrschüssen ist darüber hinaus mittels einander diametral gegenüberliegend angeordneter, in der Wandung des Halbrohres mit dem größeren Halbmesser verschraubbarer Schrauben herstellbar, deren Schäfte gegen ein an der Außenseite der Wandung des Halbrohres mit dem kleineren Halbmesser vorgesehenes Widerlager gerichtet sind. Nach Anziehen solcher Schrauben werden die inneren Halbrohre des Verbindungsstückes vorteilhafterweise gegen die Außenseite der anliegenden Wandungen der Innenrohre der beiden Doppelrohrschüsse und gleichzeitig aber auch die äußeren Halbrohre des Verbindungsstückes gegen die Innenwandungen der Außenrohre der beiden zu verbindenden Doppelrohrschüsse gedrückt.

Diese Schrauben und ihre Widerlager befinden sich vorteilhafterweise in einer Ebene, die zur Grundebene der beiden inneren Halbrohre des Verbindungsstückes senkrecht verläuft. Wenn nun die beiden Grundebenen der Halbrohre des Verbindungsstückes, wie oben erwähnt, einen Winkel von 80° miteinander einschließen, dann befinden sich diese Schrauben außerhalb des Bereiches der in der Grundebene der größeren Halbrohre verlaufenden ineinandergreifenden Ränder dieser Halbrohre und beeinträchtigen in in keiner Weise die Abdichtung der beiden Hälften des Verbindungsstückes in bezug zueinander.

Zum Ansetzen der Schrauben, die gegebenenfalls als Gewindeschneidschrauben (Blechschrauben) ausgebildet sein können, ist zweckmäßigerweise an der Außenseite des Halbrohres mit dem größeren Halbmesser eine Rille vorgesehen. Es empfiehlt sich, in Längsrichtung der Halbrohre zumindest zwei voneinander distanzierte Schrauben anzuordnen. Man kann dann diese Schrauben jeweils in Nähe der Ränder der Außenrohre der beiden miteinander zu verbindenden Doppelrohrschüssse anbringen und dadurch eine auch axial formschlüssige Verbindung zwischen diesen Rohrschüssen und dem Verbindungsstück herstellen.

Ein Ausführungsbeispiel des Erfindungsgegenstandes ist in den Zeichnungen veranschaulicht und nachstehend an Hand dieser Zeichnungen erläutert. Im einzelnen zeigen
- Fig.1: eine Seitenansicht einer Verbindung von Doppelrohrschüssen mittels eines als Verbindungsstück dienenden erfindungsgemäßen Doppelrohres,
- Fig.2: ein einzelnes solches Doppelrohr im Querschnitt,
- Fig.3: einen Querschnitt nach III-III der Fig.1 und
- Fig.4 bis 6: verschiedene Ausführungsformen solcher Doppelrohrverbindungen in Längsschnitten.

In allen Zeichnungsfiguren sind die Außenrohre der miteinander zu verbindenden Doppelrohrschüsse mit 1 und deren koaxiale Innenrohre mit 2 bezeichnet.

Die beiden allgemein mit 3 bezeichneten Hälften des als Verbindungsstück eingesetzten, erfindungsgemäß ausgebildeten Doppelrohres sind einander gleich und sind paarweise zum Doppelrohr zusammenfügbar.

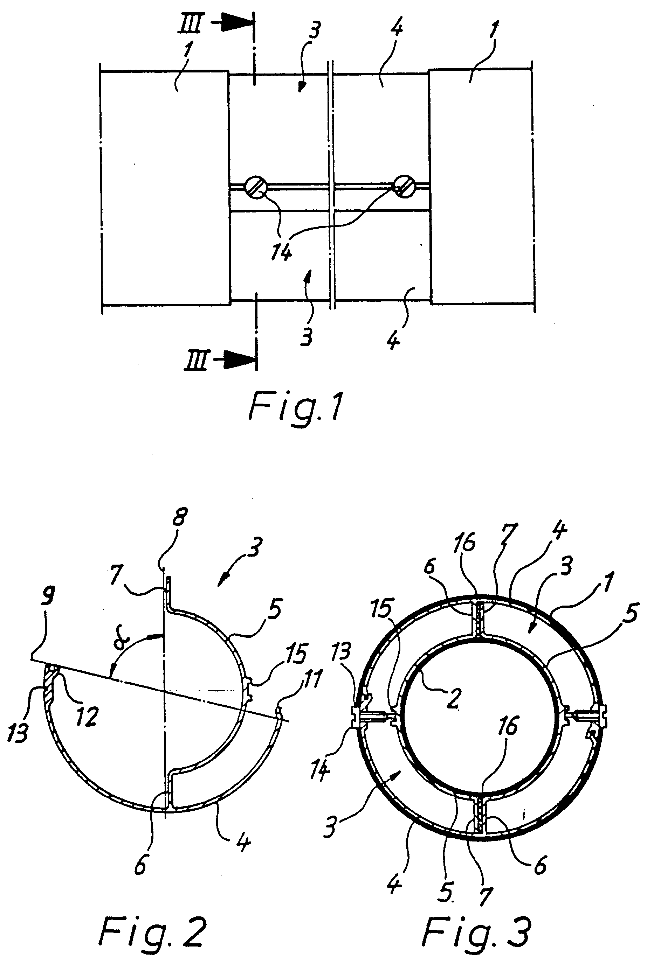

Eine solche Hälfte besteht gemäß Fig.2 jeweils aus einem Halbrohr 4 mit einem dem Innendurchmesser der Außenrohre 1 der zu verbindenden Doppelrohrschüsse entsprechenden Außendurchmesser und aus einem Halbrohr 5 mit einem dem Außendurchmesser deren Innenrohre 2 entsprechenden Innendurchmesser.

Diese beiden Halbrohre 4 und 5 einer Hälfte 3 des als Verbindungsstück dienenden Doppelrohres sind miteinander koaxial über einen an einen Rand des Halbrohres 4 mit dem kleineren Halbmesser ansetzenden, radial nach außen ragenden Flansch 6 verbunden, dessen Breite der Differenz zwischen den Halbmessern der beiden Halbrohre 4 und 5, also auch etwa der Differenz zwischen den Halbmessern der Außen- und Innenrohres 1 bzw. 2 der zu verbindenden Doppelrohrschüsse entspricht.

Auch der andere, gegenüberliegende Rand des Halbrohres 5 mit dem kleineren Halbmesser weist einen solchen radial ansetzenden und nach außen ragenden Flansch 7 derselben Breite auf.

Wie aus Fig.2 gut ersichtlich ist, schließt die von den beiden Flanschen 6 und 7 des Halbrohres 5 mit dem kleineren Halbmesser bestimmte Grundebene 8 mit der von den beiden Rändern des Halbrohres 4 mit dem größeren Halbmesser bestimmten Grundebene 9 einen winkel α von etwa 80° ein.

Von den beiden Rändern des Halbrohres 4 mit dem größeren Halbmesser weist der eine Rand eine Feder 11 und der andere Rand eine zu dieser Feder 11 passende, der formschlüssigen Verbindung der beiden Ränder jeweils zweier Hälften 3 dienende Nut 12 auf.

Zur Fixierung und Abdichtung der Verbindung der Doppelrohr= schüsse sind einander diametral gegenüberliegend angeordnete, in der Wandung der Halbrohre 4 mit dem größeren Halbmesser verschraubbare Schrauben 14 vorgesehen, deren Schäfte gegen die an der Außenseite der Wandung des Halbrohres 5 mit dem kleineren Halbmesser ausgebildeten Widerlager 15 gerichtet sind.

Die Schrauben 14 und ihre Widerlager 15 sind in einer Ebene angeordnet, die zur Grundebene 8 des Halbrohres 5 mit dem kleineren Halbmesser, also zur Ebene der Flanschen 6 und 7, senkrecht verläuft und mit der durch die Ränder des größeren Halbrohres 4 bestimmten Grundebene 9 einen Winkel von etwa 10° einschließt. Dadurch befinden sich diese Schrauben 14 außerhalb des Bereiches der dichtenden, mit Feder 11 und Nut 12 ausgebildeten Ränder der Halbrohre 4 mit dem größeren Halbmesser.

In dieser Ebene der Schrauben 14 und ihrer Widerlager 15 ist an der Außenseite des Halbrohres 4 mit dem größeren Halbmesser eine aus Fig.1 ersichtliche Rille 13 zum Ansetzen der Schrauben 14 vorgesehen.

Bei der aus Fig.3 ersichtlichen fertigen Verbindung liegen die Flanschen 6 und 7 der beiden Hälften 3 des Verbindungsstückes an einer Dichtung 16 an und schließen diese Dichtung gemeinsam ein. Die Federn 11 und Nuten 12 der Ränder der Halbrohre 4 mit dem größeren Halbmesser greifen dichtend ineinander und durch die gegen das Widerlager 15 drückenden Schrauben 14 werden die Halbrohre 4 mit dem größeren Halbmesser an die Innenseite der Wandung der Außenrohre 1 und die Halbrohre 5 mit dem kleineren Halbmesser an die Außenseite der Wandung der Innenrohre 2 angedrückt. Durch das Anziehen der Schrauben 14 werden also sowohl die beiden Hälften 3 des Verbindungsstückes miteinander als auch dieses Verbindungsstück mit den beiden Rohrschüssen dichtend verbunden.

Wie die Fig.1 zeigt, sind jeweils zumindest zwei in der Längsrichtung der Rohre voneinander distanzierte Schrauben 14 vorgesehen, und zwar sind sie vorteilhafterweise in unmittelbarer Nähe der zueinanderweisenden Ränder der beiden Außenrohre 1 der mitteinander zu verbindenden Doppelrohrschüsse angeordnet, um auf diese Weise eine formschlüssige Verbindung dieser Doppelrohrschüsse auch in axialer Richtung zu erzielen.

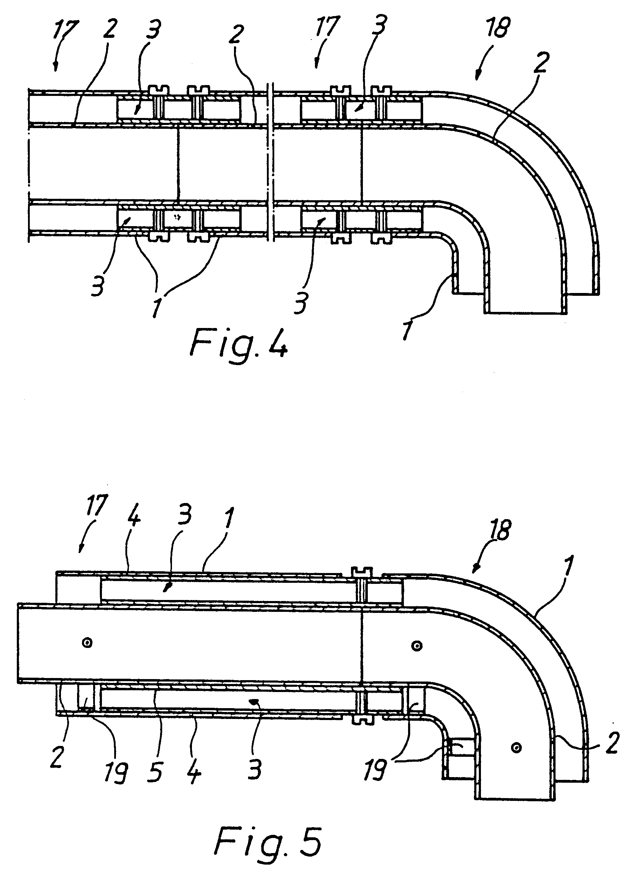

Fig.4 zeigt eine Verbindung zweier Doppelrohrschüsse 17 miteinander und eines Doppelrohrschusses 17 mit einem Doppelrohrkrümmer 18, wobei die Verbindungsstücke aus den Hälften 3 gewissermaßen als Rohrschellen wirksam sind und die Anordnung von Abstandbügeln erübrigen.

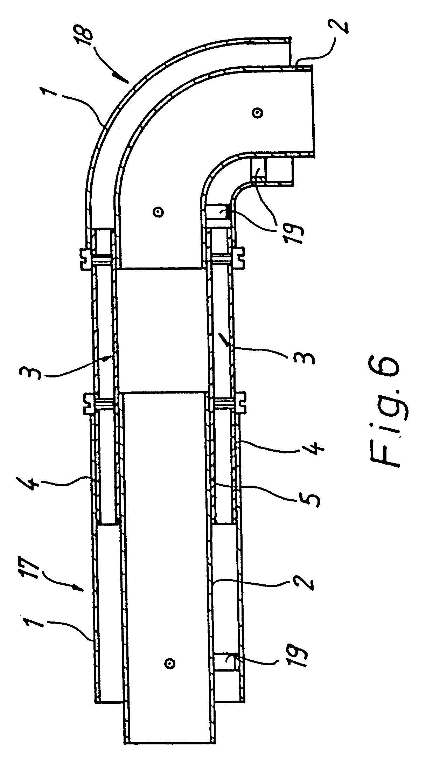

Fig. 5 und 6 zeigen, daß erfindungsgemäße Verbindungsstücke auch zu einer Teleskopverbindung von Doppelrohrschüssen 17 bzw. 18 mit variabler Distanz der Stirnseiten verwendbar sind.

Im Rahmen der Erfindung kann sich eine Doppelrohrleitung - gemäß haben erläuterter Ausführungsbeispiele - aus beliebig gestaltbaren Doppelrohrschüssen und erfindungsgemäß gestalteten als Verbindungsstücke dienenden Doppelrohren zusammensetzen. Man kann aber eine solche Doppelrohrleitung auch durchwegs aus erfindungsgemäß gestalteten Doppelrohren bilden, die auf beliebige Art, z.B. durch Rohrschellen, miteinander verbunden sind.

## Patentansprüche

1. Aus geraden koaxialen Rohren unterschiedlichen Durchmessers bestehendes Doppelrohr, das aus zwei sich zu einem Doppelrohr ergänzenden Hälften zusammengesetzt ist, wobei jede Hälfte aus zwei Halbrohren und Grundebenen besteht, dadurch gekennzeichnet, daß jede Hälfte (3) aus zwei umfangsmäßig gegeneinander versetzten Halbrohren (4, 5) besteht, deren Grundebenen (8, 9,) nahezu senkrecht zueinander verlaufen.

2. Doppelrohr nach Anspruch 1, dadurch gekennzeichnet, daß diese beiden Halbrohre (4,5) einer einzelnen Hälfte (3) über einen an einen Rand des Halbrohres (5) mit dem kleineren Halbmesser ansetzenden, in dessen Grundebene (8) radial nach außen ragenden Flansch (6) miteinander verbunden sind, dessen Breite der Differenz zwischen den Halbmessern der beiden Halbrohre (4,5) entspricht.

3. Doppelrohr nach Anspruch 2, dadurch gekennzeichnet, daß auch der gegenüberliegende Rand des Halbrohres (5) mit dem kleineren Halbmesser einen solchen in dessen Grundebene (8) radial ansetzenden Flansch (7) trägt.

4. Doppelrohr nach Anspruch 3, dadurch gekennzeichnet, daß die von den beiden Flanschen (6,7) bestimmte Grundebene (8) des Halbrohres (5) mit dem kleineren Durchmesser mit der von den beiden Rändern des Halbrohres (4) mit dem größeren Halbmessern bestimmten Grundebene (9) einen Winkel (α) von etwa 80° einschließt.

5. Doppelrohr nach einem der Ansprüche 2 bis 4, dadurch gekennzeichnet, daß von den beiden einander gegenüberliegenden Rändern des Halbrohres (4) mit dem größeren Halbmesser der eine Rand eine Feder (11) und der andere Rand eine zu dieser Feder (11) passende, einer formschlüssigen Verbindung der Ränder dienende Nut (12) aufweisen.

6. Verbindung koaxialer Doppelrohrschüsse mittels eines aus einem Doppelrohr nach einem der Ansprüche 1 bis 5 bestehenden Verbindungsstückes, dadurch gekennzeichnet, daß jede der beiden Hälften (3) dieses Verbindungsstückes aus einem Halbrohr (4) mit einem dem Innendurchmesser der Außenrohre (1) der zu verbindenden Rohrschüsse entsprechenden Außendurchmesser und aus einem Halbrohr (5) mit einem dem Außendurchmesser der Innenrohre (2) dieser Rohrschüsse entsprechenden Innendurchmesser besteht.

7. Verbindung nach Anspruch 6, gekennzeichnet durch einander diametral gegenüberliegend angeordnete, in der Wandung des Halbrohres (4) mit dem größeren Halbmesser verschraubbare Schrauben (14), deren Schäfte gegen ein an der Außenseite der Wandung des Halbrohres (5) mit dem kleineren Halbmesser vorgesehenes Widerlager (15) gerichtet sind.

8. Verbindung nach Anspruch 7, dadurch gekennzeichnet, daß die Schrauben (14) und ihre Widerlager (15) in einer Ebene angeordnet sind, die zur Grundebene (8) des Halbrohres (5) mit dem kleineren Halbmesser senkrecht verläuft.

9. Verbindung nach Anspruch 8, dadurch gekennzeichnet, daß in dieser Ebene der Schrauben (14) und ihrer Widerlager (15) an der Außenseite des Halbrohres (4) mit dem größeren Halbmesser eine Rille (13) zum Ansetzen der Schrauben (14) vorgesehen ist.

10. Verbindung nach einem der Ansprüche 7 bis 9, gekennzeichnet durch zumindest zwei in Längsrichtung der Halbrohre (4,5) voneinander distanziert angeordnete Schrauben (14).

11. Verbindung nach Anspruch 10, dadurch gekennzeichnet, daß diese Schrauben (14) jeweils in Nähe der Ränder der Außenrohre (1) der beiden miteinander zu verbindenden Doppelrohrschüsse (17,18) angeordnet sind.

## Claims

1. A double tube, which consists of straight coaxial tubes differing in diameter and is composed of two halves, which complement to form a double tube and each of which consists of two half-tubes and base planes, characterized in that each half (3) consists of two half-tubes (4, 5), which are peripherally offset from each other and have base planes (8,9) which are almost at right angles to each other.

2. A double tube according to claim 1, characterized in that said two half-tubes (4, 5) of one half (3) are interconnected by a flange (6), which joins one edge of that half-tube (5) which has a smaller radius and said flange radially outwardly in the base plane (8) of said half-tube and has a width that is equal to the difference between the radii of the two half-tubes (4,5).

3. A double tube according to claim 2, characterized in that the opposite edge of the half-tube (5) which has a smaller radius also carries such a flange (7), which radially joins said half-tube (5) in its base plane (8).

4. A double tube according to claim 3, characterized in that the base plane (8) of the half-tube (5) which has a smaller radius and is determined by the two flanges (6, 7) and includes an angle of about 80° with that base plane (9) which is defined by the two edges of the half-tube (4) which has a larger radius.

5. A double tube according to any of claims 2 to 4, characterized in that one of the two opposite edges of the half-tube (4) which has a larger radius is provided with a tongue (11) and the other of said two edges is provided with a groove (12), which fits said tongue (11) for making a positive joint.

6. A joint in which two coaxial double tube sections are connected by a connecting member which consists of a double tube according to any of claims 1 to 5, characterized in that each of the two halves (3) of that connecting member consists of a half-tube (4), which has an outside diameter corresponding to the inside diameter of the outer tubes (1) of the tube sections to be connected and of a half-tube (5), which has an inside diameter corresponding to the outside diameter of the inner tubes (2) of said tube sections.

7. A joint according to claim 6, characterized by diametrically opposite screws (14), which are adapted to be screwed into the wall of the half-tube (4) which has a larger radius and have shanks which are directed towards an abutment (15) which is provided on the outside surface of the wall of the half-tube (5) which has a smaller radius.

8. A joint according to claim 7, characterized in that the screws (14) and the associated abutments (15) are disposed in a plane which is at right angles to the base plane (8) of that half-tube (5) which has a smaller radius.

9. A joint according to claim 8, characterized in that the half-tube (4) which has a larger radius is formed with a groove (13), which is engageable by the screws (14) and extends in said plane in which the screws (14) and the associated abutments (15) are disposed.

10. A joint according to any of claims 7 to 9, characterized by at least two screws (14) which are spaced apart in the longitudinal direction of the half-tubes (4, 5).

11. A joint according to claim 10, characterized in that said screws (14) are disposed close to the edges of the outer tubes (1) of the two double tube sections (17, 18) which are to be connected.

## Revendications

1. Tuyau combiné comprenant des tubes droits coaxiaux de diamètre varié et se composant de deux moitiés formant ensemble un tuyau combiné, chaque moitié étant formée par deux demi-tubes et plans de base, caractérisé par le fait que chaque moitié (3) se compose de deux demi-tubes (4, 5) tournés l'un par rapport à l'autre et dont les plans de base (8, 9) sont presque perpendiculaires entre eux.

2. Tuyau combiné suivant la revendication 1, caractérisé par le fait que ces deux demi-tubes (4, 5) d'une moitié (3) sont assemblés entre eux par une bride (6) exécutée le long d'un bord du demi-tube (5) au petit rayon, et orientée radialement vers l'extérieur suivant son plan de base (8), la largeur de la bride correspondant à la différence des rayons des deux demi-tubes (4, 5).

3. Tuyau combiné suivant la revendication 2, caractérisé par le fait que le bord opposé du demi-tube (5) au petit rayon est également muni d'une telle bride radiale (7) orientée suivant son plan de base (8).

4. Tuyau combiné suivant la revendication 3, caractérisé par le fait que le plan de base (8) défini par les deux brides (6, 7) du demi-tube (5) au petit rayon forme avec le plan de base (9) formé par les bords du demi-tube (4) plus grand un angle (α) d'environ 80°.

5. Tuyau combiné suivant l'une des revendications 2 à 4, caractérisé par le fait que des deux bords opposés l'un à l'autre du demi-tube (4) plus grand, l'un est muni d'une clavette (11) et l'autre, d'une rainure (12) qui s'adapte à ladite clavette (11), servant à l'assemblage positif des bords.

6. Assemblage de tronçons de tuyaux combinés coaxiaux à l'aide d'un élément d'assemblage constitué par un tuyau combiné suivant les revendications 1 à 5, caractérisé par le fait que les deux moitiés (3) sont formées chacune par un demi-tube (4) d'un diamètre extérieur correspondant au diamètre intérieur des tubes extérieurs (1) des tronçons à assembler, et par un demi-tube (5) dont le diamètre intérieur correspond au diamètre extérieur des tubes intérieurs (2) desdits tronçons.

7. Assemblage suivant la revendication 6, caractérisé par des vis (14) disposées diamétralement l'une en face de l'autre et logées dans la paroi du demi-tube (4) plus grand, et dont les tiges sont dirigées sur un appui (15) pratiqué sur la face extérieure de la paroi du demi-tube (5) au petit rayon.

8. Assemblage suivant la revendication 7, caractérisé par le fait que les vis (14) et leurs appuis (15) se trouvent dans un plan perpendiculaire au plan de base (8) du demi-tube (5) au petit rayon.

9. Assemblage suivant la revendication 8, caractérisé par le fait que dans ce plan défini par les vis (14) et leurs appuis (15), il est prévu sur la face extérieure du demi-tube (4) plus grand une gorge (13) pour mettre les vis en place.

10. Assemblage suivant l'une des revendications 7 à 9, caractérisé par au moins deux vis (14) distancées entre elles sur la longueur des demi-tubes (4, 5).

11. Assemblage suivant la revendication 10, caractérisé par le fait que ces vis (14) sont mises chacune à proximité des bords des tubes extérieurs (1) des deux tronçons de tuyaux combinés (17, 18) à assembler.
